# EUROPÄISCHE PATENTSCHRIFT

(11) **EP 3 891 868 B1**
(45) Veröffentlichungstag und Bekanntmachung des Hinweises auf die Patenterteilung: **03.04.2024**
(21) Anmeldenummer: 19828203.0
(22) Anmeldetag: 27.11.2019
(51) Int. Cl.: H02K 3/28, H02K 11/20

(54) **ELEKTRISCHE MASCHINE UND VERFAHREN ZU DEREN BETRIEB**
ELECTRIC MACHINE AND METHOD FOR OPERATING THE SAME
MOTEUR ÉLECTRIQUE ET PROCÉDÉ POUR FAIRE FONCTIONNER LE MOTEUR ÉLECTRIQUE

(30) Priorität: 07.12.2018 DE 102018131412; 28.01.2019 DE 102019101964
(43) Veröffentlichungstag der Anmeldung: 13.10.2021
(73) Patentinhaber: Schaeffler Technologies AG & Co. KG, 91074 Herzogenaurach (DE)
(72) Erfinder: GRAMANN, Matthias, 77871 Renchen (DE); NOLTE, Christian, 97437 Haßfurt (DE)
(86) Internationale Anmeldenummer: PCT/DE2019/101015
(87) Internationale Veröffentlichungsnummer: WO 2020/114552

(56) Entgegenhaltungen:
- EP-A1- 3 595 165
- EP-A2- 1 775 823
- GB-A- 1 385 330
- NL-A- 2 017 030
- US-A- 2 486 195
- US-A1- 2005 045 392
- US-A1- 2012 194 030
- US-A1- 2014 103 850
- US-A1- 2016 104 992
- US-A1- 2017 366 115
- US-B2- 6 899 568

## Beschreibung

Die Erfindung betrifft eine elektrische Maschine mit Stator und Rotor.

Elektrische Maschinen mit Stator und Rotor sind für den Einsatz als Motoren wie als Generatoren bekannt. Es gibt auch elektrische Maschinen, die sowohl als Motor als auch als Generator betrieben werden können. Bei elektrischen Maschinen können Stator und Rotor mit fester, vorgegebener Konfiguration vorliegen. Insbesondere können die Phasen der elektrischen Maschine, und somit etwa die den Phasen entsprechenden Statorwicklungen der elektrischen Maschine, in vorgegebener Weise verschaltet sein. Eine Anpassung der elektrischen Maschine an stark variierende Anforderungen ist in diesem Fall praktisch ausgeschlossen, die elektrische Maschine ist bestenfalls für einen Betriebspunkt optimiert. Um die Flexibilität der elektrischen Maschine zu steigern, können elektronische Vorrichtungen, in hoher Zahl, vorgesehen werden. Dies führt zu hohen Kosten und vielen zusätzlichen Baugruppen, von denen jede ein bestimmtes Ausfallrisiko trägt, so dass insgesamt die Fehleranfälligkeit der elektrischen Maschine erhöht wird.

Eine elektrische Maschine gemäß dem Oberbegriff des Anspruchs 1 ist aus jeder der US 2012/194030 A1, der US 2014/103850 A1, der NL 2 017 030 A, der US 2017/366115 A1, der US 2005/045392 A1 und der EP 1 775 823 A2 bekannt.

Bezüglich weiteren Standes der Technik wird auf die EP 3 595 165 A1, die GB 1 385 330 A, die US 6 899 568 B2, die US 2 486 195 A und die US 2016/104992 A1 verwiesen.

Aufgabe der Erfindung ist es daher, eine elektrische Maschine zu schaffen, die ein hohes Maß an Flexibilität, aber eine geringe Fehleranfälligkeit aufweist.

Diese Aufgabe wird hinsichtlich der elektrischen Maschine gelöst durch eine elektrische Maschine nach Anspruch 1.

Die Unteransprüche enthalten jeweils vorteilhafte Ausgestaltungen.

Die erfindungsgemäße elektrische Maschine verfügt über einen Stator und einen Rotor. Die elektrische Maschine wird über eine oder mehrere Phasen mit Strom versorgt. Der Rotor und/oder der Stator weisen in im Grundsatz bekannter Weise entsprechende Wicklungen auf; beispielsweise hat eine permanenterregte Synchronmaschine Permanentmagneten am Rotor und trägt Wicklungen am Stator.

Erfindungsgemäß sind jedoch, für jede Phase, die Wicklungen am Stator bzw. am Rotor in getrennt schaltbare Wicklungsabschnitte unterteilt. Diese Wicklungsabschnitte sind derart untereinander verschaltet und verschaltbar, dass die elektrische Maschine in Submaschinensysteme unterteilt ist, wobei jedem Submaschinensystem ein Wicklungsabschnitt jeder Phase zugeordnet ist. Dabei kann jedes Submaschinensystem für sich als elektrische Maschine wirken. Mehrere Submaschinensysteme können auch zusammengeschaltet werden. Auf diese Weise wird ein hohes Maß an Flexibilität erzielt, da die Submaschinensysteme je nach Anforderung an die elektrische Maschine eingesetzt werden können. Die Verschaltung der Submaschinensysteme, das heißt konkreter, die Verschaltung der Wicklungsabschnitte der Submaschinensysteme sowohl innerhalb eines Submaschinensystems als auch zwischen verschiedenen Submaschinensystemen, kann über ein Schaltelement erfolgen, wodurch sich die Fehleranfälligkeit in Grenzen hält.

Betrachtet man beispielsweise, und ohne die Erfindung darauf zu beschränken, eine dreiphasige permanenterregte Synchronmaschine, so trägt der Rotor Permanentmagnete, der Stator Wicklungen für jede der drei Phasen. Die Wicklung für jede Phase ist nun in eine Anzahl, etwa, und ohne Einschränkung, vier, Wicklungsabschnitte unterteilt. Die Wicklungsabschnitte sind so verschaltet, dass sich vier Submaschinensysteme ergeben, wobei jedes Submaschinensystem insgesamt drei Wicklungsabschnitte umfasst, einen Wicklungsabschnitt pro Phase. Die Wicklungsabschnitte eines Submaschinensystems samt zugehörigen Statorbereichen und der Rotor der elektrischen Maschine können jeweils als separate elektrische Maschine aufgefasst werden. Dies ist, was im Rahmen dieser Anmeldung unter Submaschinensystem verstanden wird. Die einzelnen Submaschinensysteme können aufgrund der Verschaltbarkeit der Wicklungsabschnitte zusammengeschaltet werden.

Analoge Ausführungen gelten für andere Typen elektrischer Maschinen, etwa für einen Rotor mit Wicklungen und einen permanenterregten Stator.

In einer vorteilhaften Ausführungsform ist jedes Submaschinensystem für einen anderen Betriebspunkt optimiert. Dadurch liegt für jeden dieser Betriebspunkte ein optimiertes Submaschinensystem vor und damit eine für den Betriebspunkt optimierte elektrische Maschine. Ein Betriebspunkt ist beispielsweise charakterisiert durch eine bestimmte erforderliche Drehzahl des Rotors der elektrischen Maschine und ein bestimmtes durch die elektrische Maschine aufzubringendes Drehmoment. Die Optimierung der elektrischen Maschine für einen Betriebspunkt beinhaltet, dass die elektrische Maschine an dem Betriebspunkt einen maximalen Wirkungsgrad verglichen mit dem Wirkungsgrad an anderen Betriebspunkten hat. Durch bedarfsangepasste Zusammenschaltung mehrerer Submaschinensysteme kann die elektrische Maschine noch an weitere Betriebssituationen angepasst werden.

Die Schaltvorgänge zwischen Wicklungsabschnitten, und also die Schaltvorgänge zur Verschaltung der Wicklungsabschnitte untereinander, erfolgen mechanisch, vorzugsweise durch ein einziges Schaltelement oder eine niedrige Anzahl an Schaltelementen. Dieses Schaltelement kann entsprechend zuverlässig ausgelegt werden, wodurch sich die Fehleranfälligkeit der elektrischen Maschine weiter reduzieren lässt. Die mechanische Schaltung zwischen den Wicklungsabschnitten erfolgt mittels einer Kontaktscheibe. Diese Scheibe trägt auf wenigstens einer Seite Gruppen von Kontakten, wobei jede Gruppe eine andere Verschaltungsart zwischen den Wicklungsabschnitten darstellt. Je nach gewünschter Verschaltung zwischen Wicklungsabschnitten werden Kontakte dieser Wicklungsabschnitte mit der entsprechenden Gruppe von Kontakten auf der Kontaktscheibe in elektrisch leitende Verbindung gebracht. Eine Steigerung der Verschaltungsoptionen ist möglich, wenn die Kontaktscheibe beidseitig Kontakte zur Kontaktierung von Wicklungsabschnitten trägt.

Befinden sich die zu schaltenden Wicklungsabschnitte im Rotor, so kann die Kontaktscheibe beispielsweise mitrotieren. Ergänzend oder alternativ kann die Kopplung über Schleifkontakte oder durch induktive oder kapazitive Übertragung erfolgen.

Die Kontaktscheibe ersetzt in gewissem Sinne wenigstens einen Teil der Wickelköpfe, da durch die Kontaktscheibe, insbesondere wenn sie beidseitig Kontakte trägt, sehr komplexe Verknüpfungen darstellbar sind. Bei optimaler Auslegung reicht der durch die entfallenen Wickelköpfe freiwerdende Bauraum für die Kontaktscheibe und die Mechanik zu ihrer Betätigung. Soll eine Hohlleiterkühlung mit verbaut werden, so kann zum Beispiel nicht die veredelte Endfläche eines Leiters kontaktiert werden, sondern Zwischenelemente, die mit dem Leiter elektrisch leitend verbunden sind.

Vorzugsweise erfolgt die Umschaltung zwischen verschiedenen Verschaltungen der Wicklungsabschnitte strom- und spannungslos, zumindest bei deutlich niedrigeren Spannungen und Strömen, als maximal beim Betrieb in der elektrischen Maschine auftreten. Bei elektrischen Maschinen mit Permanentmagneten ist hierzu in Ausführungsformen eine Einrichtung vorgesehen, durch welche wenigstens ein Permanentmagnet der elektrischen Maschine vorübergehend entmagnetisiert werden kann. Dabei ist die Einrichtung auch dazu ausgebildet, einen entmagnetisierten Permanentmagneten wieder zu magnetisieren. Es kann in Ausführungsformen ausreichend sein, anstatt einer vollständigen Entmagnetisierung die Magnetisierung des Permanentmagneten nur zu reduzieren, und entsprechend später wieder zu erhöhen. Dementsprechend wäre auch die eben genannte Einrichtung ausgebildet.

Die Schaltung zwischen den Wicklungsabschnitten erfolgt mechanisch mittels einer Kontaktscheibe. Die Schaltung zwischen den Wicklungsabschnitten der elektrischen Maschine umfasst dabei zumindest die folgenden Schritte:
Zunächst wird die Kontaktscheibe in Richtung einer Drehachse der Kontaktscheibe verschoben, um eine elektrisch leitende Verbindung zwischen Kontakten der Kontaktscheibe und wenigstens einem Wicklungsabschnitt wenigstens eines Submaschinensystems zu unterbrechen. Dann wird die Kontaktscheibe um die Drehachse der Kontaktscheibe gedreht, um eine Verschaltungsart zwischen den Wicklungsabschnitten der Submaschinensysteme auszuwählen. Schließlich wird die Kontaktscheibe in Richtung der Drehachse der Kontaktscheibe verschoben, um eine elektrisch leitende Verbindung zwischen Kontakten der Kontaktscheibe und wenigstens einem Wicklungsabschnitt wenigstens eines Submaschinensystems herzustellen. Die vorausgehende Drehung hat dabei die entsprechenden Kontakte auf der Kontaktscheibe in die korrekte Position gebracht, um bei der abschließenden Verschiebung den jeweiligen Wicklungsabschnitt zu kontaktieren.

Um ein strom- und spannungsloses Umschalten zwischen verschiedenen Verschaltungen der Wicklungsabschnitte der elektrischen Maschine zu ermöglichen, wird in einer Ausführungsform für die Umschaltung zunächst wenigstens ein Permanentmagnet der elektrischen Maschine entmagnetisiert. Dann erfolgt die eigentliche Umschaltung, wie oben beschrieben. Anschließend wird wenigstens ein Permanentmagnet der elektrischen Maschine magnetisiert. Dabei kann es sich um denselben Permanentmagneten handeln, der zuvor entmagnetisiert wurde, oder um einen anderen Permanentmagneten. Unter Entmagnetisierung ist auch hier eine Reduktion der Magnetisierung mitumfasst.

In einer Weiterbildung erfolgen die Entmagnetisierung und die Magnetisierung durch mindestens einen rotierenden Magneten. Beispielsweise laufen Permanentmagneten eines Rotors mit wechselnder Polarisierung an dem rotierenden Magneten vorbei. Dieser Magnet rotiert derart synchronisiert mit dem Rotor, dass seine Polarisierung jeweils entgegengesetzt zu der des gerade vorbeilaufenden Rotormagneten ist. Auf diese Weise wird die Magnetisierung des Rotormagneten reduziert. Eine Remagnetisierung der Rotormagneten kann durch einen weiteren rotierenden Magneten erfolgen, dessen Rotation derart mit der Rotation des Rotors synchronisiert ist, dass seine Polarisierung jeweils die Richtung der dem vorbeilaufenden Rotormagneten zu erteilenden Polarisierung aufweist. Die Synchronisation zwischen dem Rotor und den rotierenden Magneten kann beispielsweise über Getriebe, welche den Rotor mit den rotierenden Magneten koppeln, oder durch Aktuatoren für die rotierenden Magneten erfolgen.

Nachfolgend werden die Erfindung und ihre Vorteile an Hand der beigefügten schematischen Zeichnungen näher beschrieben.
- Figur 1: zeigt schematisch eine erfindungsgemäße elektrische Maschine.
- Figur 2: zeigt schematisch die Aufenthaltswahrscheinlichkeit einer elektrischen Maschine bei verschiedenen Betriebspunkten während des Betriebs.
- Figur 3: zeigt schematisch das Auftreten einer Feldschwächung.
- Figur 4: zeigt optimale Einsatzbereiche verschiedener Submaschinensysteme.
- Figur 5: zeigt schematisch eine Schaltung, um eine elektrische Maschine wahlweise unterschiedlich zu beschalten.
- Figur 6: zeigt eine Anordnung von Kontakten der elektrischen Maschine zur Zusammenwirkung mit einer Kontaktscheibe.
- Figur 7: zeigt Kontakte einer Kontaktscheibe in einer Schaltstellung.
- Figur 8: zeigt Kontakte der Kontaktscheibe aus Fig. 7 in einer weiteren Schaltstellung.
- Figur 9: zeigt den Vorgang des Wechsels der Schaltstellung mittels einer Kontaktscheibe.
- Figur 10: zeigt die Verwendung einer Kontaktscheibe, die beidseitig Kontakte trägt.
- Figur 11: zeigt die Entmagnetisierung von Rotormagneten.

Die Zeichnungen beziehen sich lediglich auf Ausführungsbeispiele der Erfindung, welche zum besseren Verständnis der Erfindung erläutert werden. Keinesfalls sind die Zeichnungen und die zugehörige Beschreibung als Beschränkung der Erfindung auf die darin erläuterten Ausführungsformen aufzufassen.

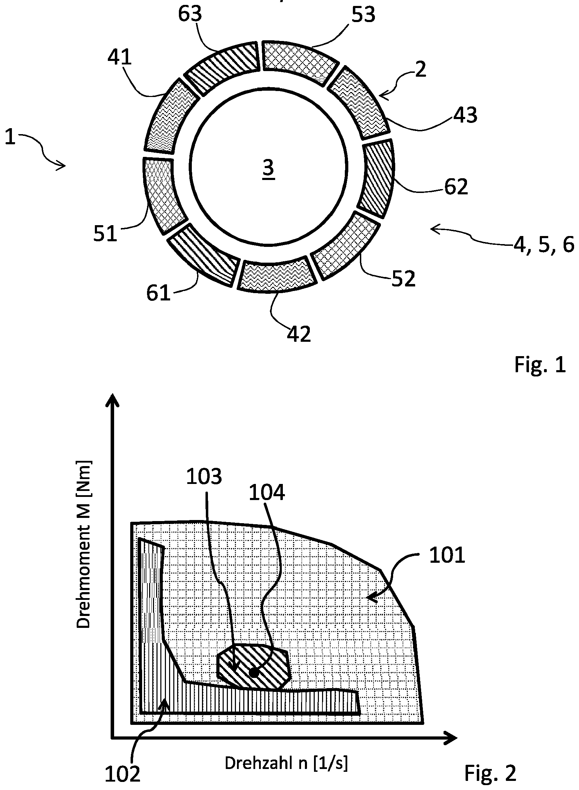

**Fig. 1** zeigt schematisch eine erfindungsgemäße elektrische Maschine 1 mit Stator 2 und Rotor 3. Elektrische Leitungen zu der elektrischen Maschine 1 sind hier nicht dargestellt; die gezeigte elektrische Maschine 1 ist eine dreiphasige elektrische Maschine 1. Der Stator 2 umfasst Wicklungen, die in Wicklungsabschnitte 41, 42, 43, 51, 52, 53, 61, 62, 63 unterteilt sind. Die Wicklungsabschnitte 41, 51, 61 sind Abschnitte der Wicklung für die erste Phase. Die Wicklungsabschnitte 42, 52, 62 sind Abschnitte der Wicklung für die zweite Phase. Die Wicklungsabschnitte 43, 53, 63 sind Abschnitte der Wicklung für die dritte Phase. Die elektrische Maschine 1 ist in drei Submaschinensysteme 4, 5, 6 unterteilt. Wicklungsabschnitte 41, 42, 43 und Rotor 3 sind wesentliche Bestandteile des Submaschinensystems 4. Wicklungsabschnitte 51, 52, 53 und Rotor 3 sind wesentliche Bestandteile des Submaschinensystems 5. Wicklungsabschnitte 61, 62, 63 und Rotor 3 sind wesentliche Bestandteile des Submaschinensystems 6. Jedes Submaschinensystem 4, 5, 6 umfasst daher den Rotor 3 und je einen Wicklungsabschnitt für jede der drei Phasen. Jedes Submaschinensystem 4, 5, 6 kann für sich als elektrische Maschine wirken. Durch geeignete Verschaltung zwischen den Wicklungsabschnitten 41, 42, 43, 51, 52, 53, 61, 62, 63 können einzelne Submaschinensysteme 4, 5, 6 ausgewählt, zwei der Submaschinensysteme 4, 5, 6 ausgewählt, oder alle drei Submaschinensysteme 4, 5, 6 ausgewählt werden, um in einer bestimmten Anforderungssituation an die elektrische Maschine 1 zu der Wirkung der elektrischen Maschine 1 beizutragen. Ferner ermöglicht die geeignete Schaltung zwischen den Wicklungsabschnitten 41, 42, 43, 51, 52, 53, 61, 62, 63 auch, verschiedene Schalttopologien innerhalb eines Submaschinensystems 4, 5, 6 zu realisieren. Die Möglichkeit, zwischen den Wicklungsabschnitten 41, 42, 43, 51, 52, 53, 61, 62, 63 zu schalten, ergibt also ein hohes Maß an Flexibilität und Anpassbarkeit der elektrischen Maschine 1 an variierende Anforderungen.

**Fig. 2** zeigt schematisch in einem Beispiel für den Betrieb einer elektrischen Maschine die Aufenthaltswahrscheinlichkeit bei verschiedenen Betriebspunkten; die Betriebspunkte sind durch Drehzahl n der elektrischen Maschine und Drehmoment M der elektrischen Maschine gekennzeichnet. An Betriebspunkten in einem Bereich 101 hält sich die elektrische Maschine während des Betriebs nur mit geringer Wahrscheinlichkeit auf, insgesamt beispielsweise mit 10% Wahrscheinlichkeit. An Betriebspunkten in einem Bereich 102 hält sich die elektrische Maschine während des Betriebs mit höherer Wahrscheinlichkeit auf; die Aufenthaltswahrscheinlichkeit im Bereich 102 kann beispielsweise 30% betragen. An Betriebspunkten in einem Bereich 103 hält sich die elektrische Maschine während des Betriebs mit hoher Wahrscheinlichkeit auf; die Aufenthaltswahrscheinlichkeit im Bereich 103 kann beispielsweise 60% betragen. Dabei kann es sein, dass die Aufenthaltswahrscheinlichkeit an einem Betriebspunkt 104 maximal ist. Vorrangiges Ziel der Auslegung der elektrischen Maschine sollte es sein, die elektrische Maschine für den Betrieb im Bereich 103, gegebenenfalls für den Betrieb am Punkt 104, zu optimieren; insbesondere sollte der im Allgemeinen betriebspunktabhängige Wirkungsgrad der elektrischen Maschine im Bereich 103, gegebenenfalls am Punkt 104, maximal sein. Zusätzlich vorteilhaft könnte die elektrische Maschine noch so ausgelegt sein, dass sie die maximale Drehzahl erreichen kann, etwa durch anpassbare Magnete.

Bei einer erfindungsgemäßen elektrischen Maschine kann eines der Submaschinensysteme, im Beispiel der elektrischen Maschine 1 aus Fig. 1 etwa das Submaschinensystem 4, für den Betrieb am Betriebspunkt 104 oder im Bereich 103 optimiert sein. Für den Betrieb in einem anderen Bereich, etwa 102, könnte dann das Submaschinensystem 5 optimiert sein, wobei etwa das Submaschinensystem 4, sofern es aktiv ist, die höheren Drehzahlen, außerhalb des Bereichs 103, ohne Momentenbeitrag erreicht, aber auch ohne die Wirkung des Submaschinensystems 5 zu stören. Die Submaschinensysteme werden vorzugsweise in Bereichen außerhalb des jeweiligen Feldschwächungsbereichs betrieben.

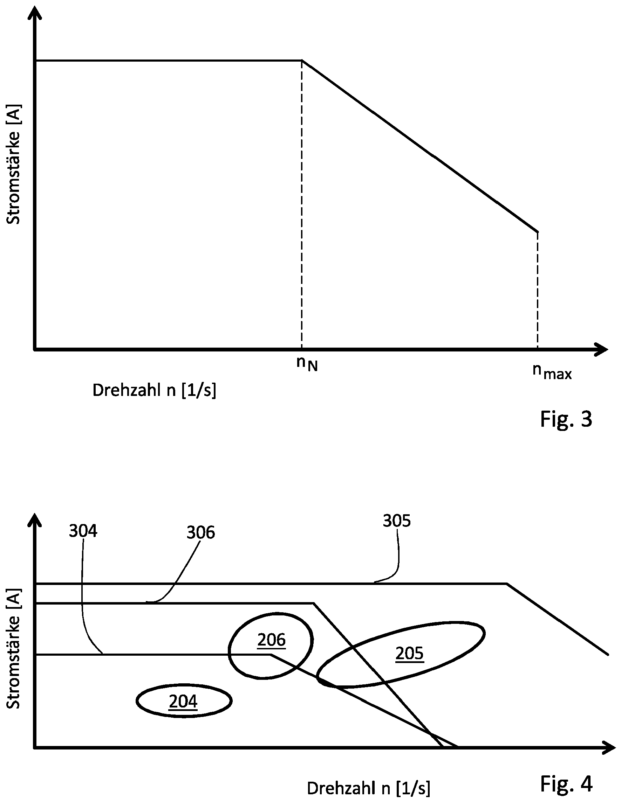

**Fig. 3** zeigt in einem Diagramm, in dem die Stromstärke in den Wicklungen der elektrischen Maschine gegen die Drehzahl der elektrischen Maschine aufgetragen ist, schematisch das Auftreten der Feldschwächung. Diese zeigt sich bei Drehzahlwerten größer als n_{N} durch ein Abfallen der Stromstärke. Die Submaschinensysteme der erfindungsgemäßen elektrischen Maschine sind bevorzugt für den Betrieb außerhalb des Auftretens der Feldschwächung optimiert.

**Fig. 4** zeigt in einem Diagramm analog Fig. 3 Einsatzbereiche 204, 205, 206, für die die Submaschinensysteme 4, 5, 6 (siehe Fig. 1) jeweils optimiert sind, sowie zugehörige Kurven 304, 305, 306 der Stromstärken in Abhängigkeit von der Drehzahl der elektrischen Maschine 1 (siehe Fig. 1) und damit auch des jeweiligen Submaschinensystems 4, 5, 6. Genauer beziehen sich Einsatzbereich 204 und Kurve 304 auf Submaschinensystem 4, Einsatzbereich 205 und Kurve 305 auf Submaschinensystem 5, Einsatzbereich 206 und Kurve 306 auf Submaschinensystem 6.

Soll die elektrische Maschine 1 etwa in einem Drehzahlbereich betrieben werden, der dem Bereich 204 entspricht, so kann es genügen, allein Submaschinensystem 4 zu betreiben. Sind höhere Drehzahlen gefordert, so kann es ausreichend sein, allein Submaschinensystem 5 zu betreiben. Sind jeweils höhere Momente gefordert, so kann Submaschinensystem 6 zusätzlich betrieben werden. Selbstverständlich sind auch andere Kombinationen der Submaschinensysteme und auch andere optimale Einsatzbereiche der einzelnen Submaschinensysteme denkbar. Wird bei einem der Submaschinensysteme die Verschaltung der Wicklungsabschnitte des Submaschinensystems geändert, so können während dieses Umschaltvorgangs verbleibende, d.h. nicht in einem Umschaltvorgang begriffene, Submaschinensysteme die anfallende Last übernehmen.

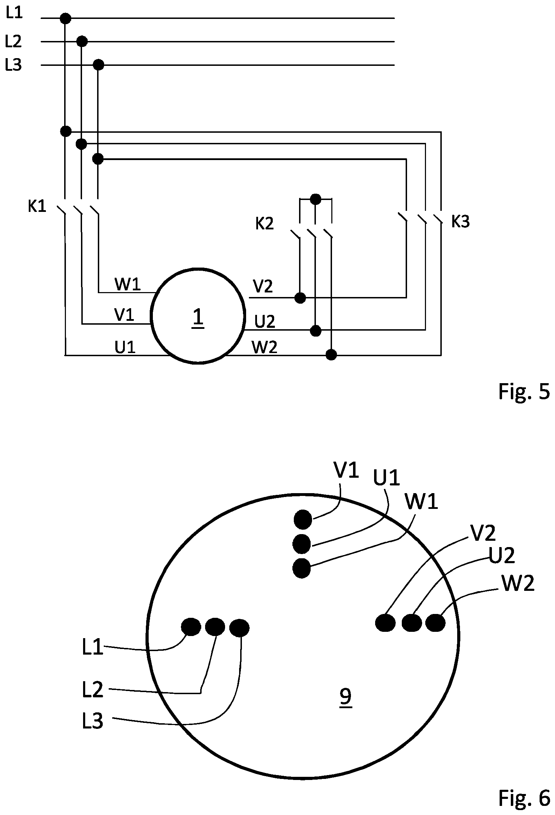

**Fig. 5** zeigt schematisch eine Schaltung, um eine elektrische Maschine 1 wahlweise unterschiedlich zu beschalten. Nach dem gleichen Prinzip können auch einzelne Submaschinensysteme 4, 5, 6 (siehe Fig. 1) der erfindungsgemäßen elektrischen Maschine 1 unterschiedlich beschalten werden.

Die gezeigte elektrische Maschine 1 ist dreiphasig und wird über drei Außenleiter L1, L2, L3 mit Strom versorgt. Die Schalter K1 dienen dabei dazu, eine Verbindung der elektrischen Maschine 1 zum Netz herzustellen bzw. zu trennen. An der elektrischen Maschine 1 sind Kontakte W1, V1, U1, sowie V2, U2, W2 vorgesehen. Durch Schließen der Schalter K3 und Öffnen der Schalter K2 erzielt man eine Dreiecksschaltung für die elektrische Maschine 1. Durch Schließen der Schalter K2 und Öffnen der Schalter K3 erzielt man eine Sternschaltung für die elektrische Maschine 1.

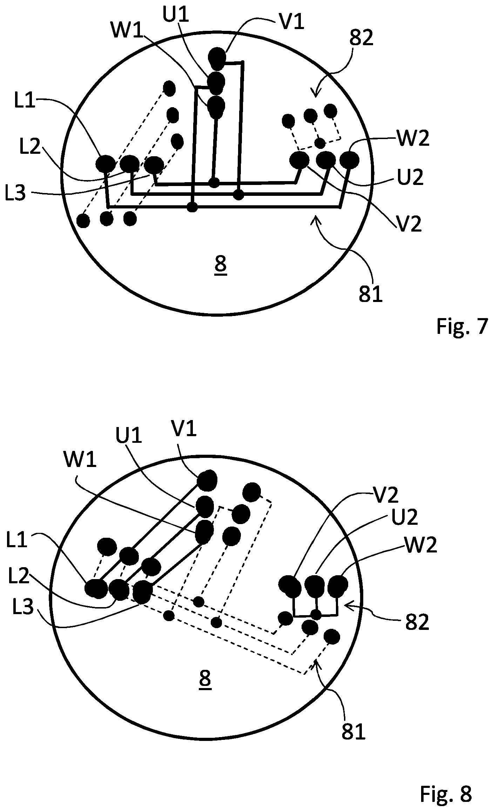

**Fig. 6** zeigt, in den Bezeichnungen der Fig. 5, eine Anordnung von Kontakten der elektrischen Maschine zur Zusammenwirkung mit einer Kontaktscheibe (siehe Fig. 7 und Fig. 8). Die Kontakte sind hier in einem Kontaktbereich 9 angeordnet.

**Fig. 7** zeigt Kontakte 81, 82 auf einer Kontaktscheibe 8, welche die in Fig. 6 gezeigten Kontakte in einer Schaltstellung kontaktieren, in der eine Dreiecksschaltung für die elektrische Maschine 1 gegeben ist. In dieser Schaltstellung sind die Kontakte 81 aktiv, das heißt, in elektrisch leitender Verbindung mit den in Fig. 6 gezeigten Kontakten; die elektrisch leitenden Verbindungen zwischen den Kontakten 81 sind durchgezogen dargestellt. Die Kontakte 82 sind inaktiv, das heißt, nicht in elektrisch leitender Verbindung mit den in Fig. 6 gezeigten Kontakten; die elektrisch leitenden Verbindungen zwischen den Kontakten 82 sind gestrichelt dargestellt. Die Kontakte 81, 82 können einzeln geführt und abgefedert sein.

**Fig. 8** zeigt die Kontakte 81, 82 auf der Kontaktscheibe 8 aus Fig. 7, welche die in Fig. 6 gezeigten Kontakte in einer weiteren Schaltstellung kontaktieren, in der eine Sternschaltung für die elektrische Maschine 1 gegeben ist. In dieser Schaltstellung sind die Kontakte 82 aktiv, das heißt, in elektrisch leitender Verbindung mit den in Fig. 6 gezeigten Kontakten; die elektrisch leitenden Verbindungen zwischen den Kontakten 82 sind durchgezogen dargestellt. Die Kontakte 81 sind inaktiv, das heißt, nicht in elektrisch leitender Verbindung mit den in Fig. 6 gezeigten Kontakten; die elektrisch leitenden Verbindungen zwischen den Kontakten 81 sind gestrichelt dargestellt.

Die in Fig. 8 gezeigte Schaltstellung ergibt sich aus der in Fig. 7 gezeigten Schaltstellung letztlich durch Drehung der Kontaktscheibe 8 um eine zur Zeichenebene senkrechte Achse. Dabei wird die Kontaktscheibe 8 zwischenzeitlich senkrecht zur Zeichenebene verschoben.

Die mit Bezug auf die Figuren 7 und 8 gezeigte Umschaltung zwischen einer Dreiecksschaltung und einer Sternschaltung ist ein Beispiel zur Erläuterung des Umschaltens mittels einer Kontaktscheibe. Je nach Ausgestaltung der Gruppen von Kontakten auf der Kontaktscheibe sind andere bzw. weitere Schaltungstypen realisierbar.

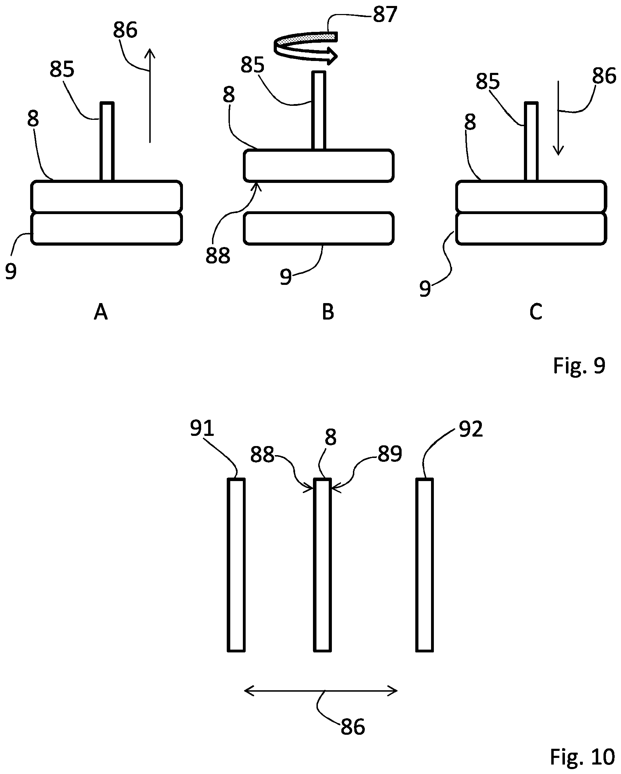

**Fig. 9** zeigt schematisch den Wechsel einer Schaltstellung unter Verwendung einer Kontaktscheibe 8. Die gezeigte Kontaktscheibe trägt auf einer Seite 88 Kontakte, wie etwa in Fig. 7 oder Fig. 8 gezeigt. Im Stadium A sind Kontakte der Kontaktscheibe 8 in elektrisch leitender Verbindung mit Kontakten des Kontaktbereichs 9. Der Kontaktbereich 9 ist natürlich Teil der elektrischen Maschine, von der hier aber keine weiteren Komponenten gezeigt sind; ebenso wenig sind elektrische Leitungen zu dem Kontaktbereich 9 dargestellt. Indem die Kontaktscheibe 8 in Richtung 86 einer Drehachse 85 der Kontaktscheibe 8 von dem Kontaktbereich 9 wegbewegt wird, wird die elektrisch leitende Verbindung zwischen Kontakten der Kontaktscheibe 8 und Kontakten des Kontaktbereichs 9 unterbrochen, und man gelangt zu Stadium B. In Stadium B erfolgt eine Drehung 87 um die Drehachse 85. Damit werden andere Kontakte der Kontaktscheibe 8 in die korrekte Winkelposition zu den Kontakten auf dem Kontaktbereich 9 gebracht und man gelangt zu Stadium C. Im Stadium C wird die Kontaktscheibe 8 in Richtung 86 entlang der Drehachse 85 der Kontaktscheibe 8 auf den Kontaktbereich 9 zu bewegt, und so wird eine elektrisch leitende Verbindung zwischen den Kontakten im Kontaktbereich 9 und den durch die Drehung 87 korrekt positionierten Kontakten der Kontaktscheibe 8 hergestellt. Beispielsweise kann so der Übergang von der in Fig. 7 gezeigten Schaltstellung zu der in Fig. 8 gezeigten Schaltstellung vollzogen werden. In dem gezeigten Beispiel verfügt die Kontaktscheibe 8 über eine körperliche Drehachse 85, über die eine Drehung der Kontaktscheibe 8 bewirkt werden kann. Eine solche körperliche Drehachse 85 stellt jedoch keine Einschränkung der Erfindung dar, eine Drehung der Kontaktscheibe könnte auch anderweitig bewirkt werden, etwa durch Einwirkung auf einen Randbereich der Kontaktscheibe; auch in diesem Fall läge jedoch eine geometrische Drehachse vor, und entsprechend wäre die Richtung 86 definiert.

**Fig. 10** zeigt eine Kontaktscheibe 8, welche beidseitig, also auf einer Seite 88 und auf einer gegenüberliegenden Seite 89 Kontakte trägt. Die Kontaktscheibe 8 ist zur Zusammenwirkung mit zwei Kontaktbereichen 91, 92 vorgesehen. Die Kontaktbereiche 91, 92 tragen jeweils Kontakte wie beispielsweise in Fig. 6 gezeigt. Durch Verschiebung der Kontaktscheibe 8 in Richtung 86 können Kontakte auf der Seite 88 mit Kontakten auf dem Kontaktträger 91 in elektrisch leitende Verbindung treten, oder Kontakte auf der Seite 89 mit Kontakten auf dem Kontaktträger 92 in elektrisch leitende Verbindung treten. Zusätzlich sind auch hier Rotationen der Kontaktscheibe 8 möglich, analog zu

Fig. 9. Eine Kontaktscheibe 8 mit Kontakten auf beiden Seiten, 88, 89 bietet die Möglichkeit, eine größere Anzahl an Schaltmöglichkeiten zwischen den Wicklungsabschnitten der elektrischen Maschine zu realisieren.

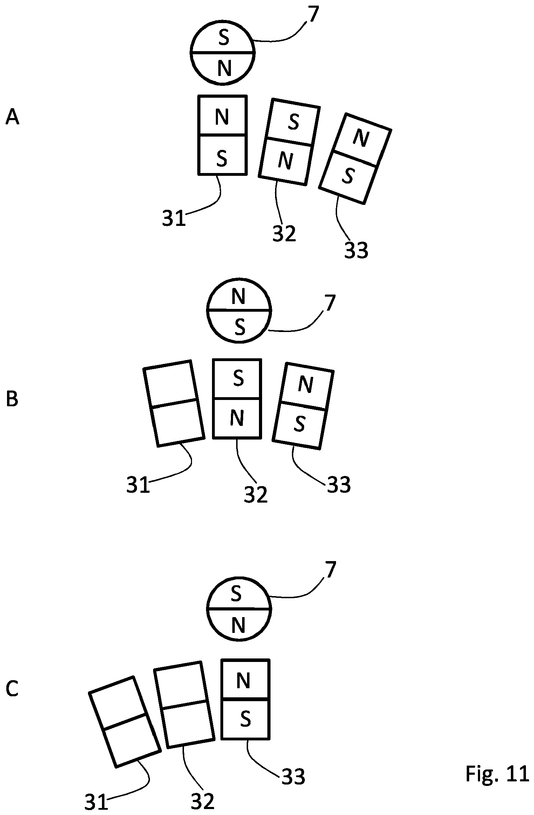

**Fig. 11** zeigt die Entmagnetisierung von Rotormagneten mittels eines rotierenden Magneten 7. Beispielhaft sind drei Rotormagnete 31, 32, 33 dargestellt; zu allen Magneten ist die Lage der Nordpole "N" und Südpole "S" angegeben. Im Stadium A liegt der Rotormagnet 31 dem rotierenden Magneten 7 gegenüber. Ersichtlich haben Rotormagnet 31 und Magnet 7 entgegengerichtete Polarisationen, so dass der Rotormagnet 31 entmagnetisiert wird. Im Stadium B ist der Rotormagnet 31 entmagnetisiert, und Rotormagnet 32 liegt gegenüber dem rotierenden Magneten 7. Da der Magnet 7 rotiert, sind nunmehr die Polarisationen von Magnet 7 und Rotormagnet 32 entgegengesetzt. Dadurch wird Rotormagnet 32 entmagnetisiert, wie zu Stadium C dargestellt, in dem nunmehr Rotormagnet 33 dem rotierenden Magneten 7 gegenüberliegt. Wiederum sind die magnetischen Polarisationen von rotierendem Magnet 7 und Rotormagnet 33 entgegengesetzt. Die Rotation des rotierenden Magneten 7 ist gerade so auf die Rotation des Rotors abgestimmt, dass die Polarisationen von rotierendem Magnet 7 und diesem gegenüberliegenden Rotormagnet einander stets entgegengerichtet sind.

Sollen entmagnetisierte Rotormagnete wieder magnetisiert werden, so kann dies geschehen, indem sie wie in Fig. 11 gezeigt an einem rotierenden Magneten vorbeigeführt werden. Dessen Polarisation ist dann aber jeweils so gerichtet, dass sie der dem jeweiligen Rotormagneten zu erteilenden Polarisation parallel ist.

In Fig. 11 liegen sich rotierender Magnet 7 und Rotormagnete 31, 32, 33 direkt gegenüber. Es ist jedoch auch denkbar, zwischen dem rotierenden Magnet und den Rotormagneten ein Leitelement für den magnetischen Fluss vorzusehen. In diesem Fall wäre die Rotation des rotierenden Magneten so auf die Rotation des Rotors abzustimmen, dass das einem zu entmagnetisierenden Rotormagneten gegenüberliegende Ende des Leitelements eine Polung aufweist, welche gleich der Polung des dem Leitelement am nächsten liegenden Pols des Rotormagneten ist.

Ist eine Entmagnetisierung oder Remagnetisierung der Rotormagnete nicht erforderlich, so können die rotierenden Magnete und/oder die zugehörigen Leitelemente vom Rotor entfernt werden, etwa durch eine Verschiebung oder eine Schwenkbewegung.

Andere Ansätze zur Entmagnetisierung und Remagnetisierung von Rotormagneten sind ebenfalls denkbar.

### Bezugszeichenliste

- 1: elektrische Maschine
- 2: Stator
- 3: Rotor
- 4, 5, 6: Submaschinensystem
- 7: rotierender Magnet
- 8: Kontaktscheibe
- 9: Kontaktbereich
- 31, 32, 33: Rotormagnet
- 41, 42, 43: Wicklungsabschnitt
- 51, 52, 53: Wicklungsabschnitt
- 61, 62, 63: Wicklungsabschnitt
- 81, 82: Kontakte der Kontaktscheibe
- 85: Drehachse
- 86: Richtung
- 88, 89: Seite der Kontaktscheibe
- 91, 92: Kontaktbereich
- 101: Bereich
- 102: Bereich
- 103: Bereich
- 104: Betriebspunkt
- 204: Bereich
- 205: Bereich
- 206: Bereich
- 304: Kurve
- 305: Kurve
- 306: Kurve

## Patentansprüche

1. Elektrische Maschine (1) mit einem Stator (2) und einem Rotor (3), wobei
die elektrische Maschine (1) in eine Vielzahl von Submaschinensystemen (4, 5, 6) unterteilt ist, indem Wicklungen für jede Phase an dem Stator (2) oder an dem Rotor (3) derart in getrennt schaltbare Wicklungsabschnitte (41, 42, 43, 51, 52, 53, 61, 62, 63) unterteilt sind, dass jedem Submaschinensystem (4, 5, 6) jeweils ein Wicklungsabschnitt (41, 42, 43, 51, 52, 53, 61, 62, 63) für jede Phase zugeordnet ist und jedes Submaschinensystem (4, 5, 6) für sich als elektrische Maschine wirken kann, **dadurch gekennzeichnet, dass**
Schaltvorgänge zwischen Wicklungsabschnitten (41, 42, 43, 51, 52, 53, 61, 62, 63) mechanisch mittels einer Kontaktscheibe (8) erfolgen, und
die Schaltvorgänge durchgeführt werden durch
Verschieben der Kontaktscheibe (8) in Richtung (86) einer Drehachse (85) der Kontaktscheibe (8), um eine elektrisch leitende Verbindung zwischen Kontakten (81, 82) der Kontaktscheibe (8) und wenigstens einem Wicklungsabschnitt (41, 42, 43, 51, 52, 53, 61, 62, 63) wenigstens eines Submaschinensystems (4, 5, 6) zu unterbrechen;
Drehen der Kontaktscheibe (8) um die Drehachse (85) der Kontaktscheibe (8), um eine Verschaltungsart zwischen den Wicklungsabschnitten (41, 42, 43, 51, 52, 53, 61, 62, 63) der Submaschinensysteme (4, 5, 6) auszuwählen; und
Verschieben der Kontaktscheibe (8) in Richtung (86) der Drehachse (85) der Kontaktscheibe (8), um eine elektrisch leitende Verbindung zwischen Kontakten (81, 82) der Kontaktscheibe (8) und wenigstens einem Wicklungsabschnitt (41, 42, 43, 51, 52, 53, 61, 62, 63) wenigstens eines Submaschinensystems (4, 5, 6) herzustellen.

2. Elektrische Maschine (1) nach Anspruch 1, wobei jedes Submaschinensystem (4, 5, 6) für einen anderen Betriebspunkt optimiert ist.

3. Elektrische Maschine (1) nach Anspruch 1 oder 2, wobei die Kontaktscheibe (8) beidseitig Kontakte zur Kontaktierung von Wicklungsabschnitten (41, 42, 43, 51, 52, 53, 61, 62, 63) trägt.

4. Elektrische Maschine (1) nach einem der Ansprüche 1 bis 3, mit einer Einrichtung zur vorübergehenden Entmagnetisierung wenigstens eines Permanentmagneten (31, 32, 33) der elektrischen Maschine (1).

## Claims

1. An electric machine (1) having a stator (2) and a rotor (3), wherein
the electric machine (1) is divided into a plurality of sub-machine systems (4, 5, 6) in that windings for each phase on the stator (2) or on the rotor (3) are divided into separately switchable winding sections (41, 42, 43, 51, 52, 53, 61, 62, 63) such that a winding section (41, 42, 43, 51, 52, 53, 61, 62, 63) for each phase is associated with each sub-machine system (4, 5, 6) and each sub-machine system (4, 5, 6) in itself can act as an electric machine, **characterised in that**
switching operations between winding sections (41, 42, 43, 51, 52, 53, 61, 62, 63) take place mechanically by means of a contact disk (8), and
the switching operations are carried out by
displacing the contact disk (8) in the direction (86) of an axis of rotation (85) of the contact disk (8) in order to interrupt an electrically conductive connection between contacts (81, 82) of the contact disk (8) and at least one winding section (41, 42, 43, 51, 52, 53, 61, 62, 63) of at least one sub-machine system (4, 5, 6);
rotating the contact disk (8) about the axis of rotation (85) of the contact disk (8) in order to select a type of connection between the winding sections (41, 42, 43, 51, 52, 53, 61, 62, 63) of the sub-machine systems (4, 5, 6); and
displacing the contact disk (8) in the direction (86) of the axis of rotation (85) of the contact disk (8) in order to establish an electrically conductive connection between contacts (81, 82) of the contact disk (8) and at least one winding section (41, 42, 43, 51, 52, 53, 61, 62, 63) of at least one sub-machine system (4, 5, 6).

2. The electric machine (1) according to claim 1, wherein each sub-machine system (4, 5, 6) is optimised for a different operating point.

3. The electric machine (1) according to claim 1 or 2, wherein the contact disk (8) carries contacts on both sides for contacting winding sections (41, 42, 43, 51, 52, 53, 61, 62, 63).

4. The electric machine (1) according to any one of claims 1 to 3, having a device for temporarily demagnetising at least one permanent magnet (31, 32, 33) of the electric machine (1).

## Revendications

1. Moteur électrique (1) comportant un stator (2) et un rotor (3),
le moteur électrique (1) étant divisé en une pluralité de sous-systèmes de moteur (4, 5, 6) en divisant les enroulements pour chaque phase sur le stator (2) ou sur le rotor (3) en sections d'enroulement (41, 42, 43, 51, 52, 53, 61, 62, 63) commutables séparément de telle sorte que chaque sous-système de moteur (4, 5, 6) se voit attribuer respectivement une section d'enroulement (41, 42, 43, 51, 52, 53, 61, 62, 63) pour chaque phase et chaque sous-système de moteur (4, 5, 6) peut agir en soi comme un moteur électrique, **caractérisé en ce que**
les processus de commutation entre les sections d'enroulement (41, 42, 43, 51, 52, 53, 61, 62, 63) s'effectuent mécaniquement au moyen d'un disque de contact (8) et
les processus de commutation sont effectuées par
déplacement du disque de contact (8) dans la direction (86) d'un axe de rotation (85) du disque de contact (8) pour interrompre une connexion électriquement conductrice entre des contacts (81, 82) du disque de contact (8) et au moins une section d'enroulement (41, 42, 43, 51, 52, 53, 61, 62, 63) d'au moins un sous-système de moteur (4, 5, 6) ;
rotation du disque de contact (8) autour de l'axe de rotation (85) du disque de contact (8) afin de sélectionner un mode d'interconnexion entre les sections d'enroulement (41, 42, 43, 51, 52, 53, 61, 62, 63) des sous-systèmes de moteur (4, 5, 6) ; et
déplacement du disque de contact (8) dans la direction (86) de l'axe de rotation (85) du disque de contact (8) pour créer une connexion électriquement conductrice entre des contacts (81, 82) du disque de contact (8) et au moins une section d'enroulement (41, 42, 43, 51, 52, 53, 61, 62, 63) d'au moins un sous-système de moteur (4, 5, 6).

2. Moteur électrique (1) selon la revendication 1, dans lequel chaque sous-système de moteur (4, 5, 6) est optimisé pour un point de fonctionnement différent.

3. Moteur électrique (1) selon la revendication 1 ou 2, dans lequel le disque de contact (8) porte des contacts des deux côtés pour la mise en contact de sections d'enroulement (41, 42, 43, 51, 52, 53, 61, 62, 63).

4. Moteur électrique (1) selon l'une des revendications 1 à 3, comportant un appareil pour démagnétiser temporairement au moins un aimant permanent (31, 32, 33) du moteur électrique (1).
